# EUROPÄISCHE PATENTSCHRIFT

(11) **EP 0 525 459 B1**
(45) Veröffentlichungstag und Bekanntmachung des Hinweises auf die Patenterteilung: **29.12.1997**
(21) Anmeldenummer: 92111643.0
(22) Anmeldetag: 09.07.1992
(51) Int. Cl.: H04B 5/00, H01F 38/00

(54) **Übertragungseinrichtung**
Transmission device
Dispositif de transmission

(30) Priorität: 30.07.1991 DE 4125145
(43) Veröffentlichungstag der Anmeldung: 03.02.1993
(73) Patentinhaber: Schwan, Ulrich, Dr.-Ing., D-88682 Salem (DE)
(72) Erfinder: Esser, Albert Dr.-Ing., W-5100 Aachen (DE); Schwan, Ulrich Dr.-Ing., W-7777 Salem-Beuren (DE)
(74) Vertreter: Engelhardt, Guido, Dipl.-Ing.

(56) Entgegenhaltungen:
- EP-A- 0 073 903
- EP-A- 0 388 792
- DE-B- 2 122 341
- US-A- 3 268 880
- US-A- 3 758 845
- US-A- 4 011 551
- Prospekt der Firma GAUSS, DE, "COMBITRANS.."

## Beschreibung

Die Erfindung bezieht sich auf eine Einrichtung zur Übertragung von elektrischer Energie in Form eines Transformators, der eine Primärwicklung, eine Sekundärwicklung sowie einen Kern aus ferromagnetischem Material aufweist.

Transformatoren dieser Art sind in einer großen Anzahl unterschiedlicher Ausgestaltung bekannt und haben sich bei Wechselströmen zur Umwandlung hoher Spannungen in niedrige und umgekehrt bewährt. Dabei treten jedoch vielfach magnetische Störfelder auf, die in benachbarten Geräten störende Brummspannungen verursachen. Trotz mitunter aufwendiger Abschirmungen können daher empfindliche Geräte, insbesondere Geräte zur Übertragung von Wechselsignalen, nicht in unmittelbarer Nähe eines Transformators angeordnet werden.

Durch die EP 0 388 792 A1 ist es bekannt, mittels Ringspulenpaaren eine kontaktlose Übertragung von Signalen vorzunehmen. Diese Ringspulenpaare sind für die gleichzeitige Übertragung von Energie und elektrischen Wechselsignalen als mehrfache Anordnung notwendig. Dabei müssen die Ringspulenpaare räumlich getrennt oder mit speziellen Abschirmringen elektrisch entkoppelt werden.

Des weiteren ist durch die US 4,011,551 eine kontaktlose, kapazitive Übertragungseinrichtung bekannt, die für jedes elektrische Wechselsignal eine jeweils getrennte kapazitive Kupplungseinrichtung verwendet. Die Energieübertragung wird dabei durch eine gesonderte räumlich getrennte induktive Kopplung mittels Spulen vorgenommen.

Ferner ist in der US 3,758,845 A1 eine induktive Kopplung mittels einer Anordnung von zwei Spulen beschrieben. Zur Energieübertragung ist dabei eine weitere Wicklung vorgesehen, die empfangsseitig für die elektrischen Wechselsignale verwendet wird. Dazu werden die Datensignale aufmodulliert.

Hier hat sich als nachteilig herausgetellt, daß die Aufmodellierung der Datensignale aufwendig ist, so daß die Modulations-Übertragungsleistung der Datenraten begrenzt oder nur mittels hohem technischem Aufwand realisierbar ist.

Darüberhinaus ist durch die EP 0 073 903 A 2 bekannt, die Übertragung mittels toroidaler magnetischer Felder zu bewerkstelligen, die mit kapazitiven Kopplern kombiniert werden können, wobei jedoch eine räumliche Trennung vorhanden ist. Stator und Rotor sind zudem unterschiedlich ausgestaltet.

Bei einer toroidalen Übertragungseinrichtung in einen Wickelraum eines Transformators hat es sich als nachteilig gezeigt, daß das Streufeld des Transformators eine Übertragung von elektrischen Wechselsignalen ohne zusätzliche elektronische Maßnahmen nicht erlaubt, da das Feld direkt einkoppelt und somit die Übertragung stört.

Es ist aber oftmals angezeigt, mit einem Aggregat nicht nur elektrische Energie oder Wechselsignale zu übertragen, sondern gleichzeitig beide Übertragungsarten einzusetzen. Durch die DE-A1 - 34 02 351 ist eine Einrichtung dieser Art bekannt. Zur kontaktlosen Übertragung von Wechselssignalen, insbesondere zum Betrieb von Sensoren, zwischen einem rotierenden und einem feststehenden Maschinenteil sind hierbei ein Sender und ein Empfänger, die wechselweise an eine Sender- und Empfangselektronik anschließbar sind, vorgesehen, außerdem wird Hilfsenergie übertragen.

Bei dieser Einrichtung sind der Sender und der Empfänger durch zwei Spulen gebildet, die konzentrisch ineinander an dem rotierend antreibbaren Maschinenteil und dem dieses aufnehmenden Gehäuse angebracht sind. Und mit einem weiteren induktiv gekoppelten zweiten Spulenpaar wird die Hilfsenergie zwischen den beiden Bauteilen übertragen.

Mit Hilfe dieser Ausgestaltung können somit zwar Meßdaten und Hilfsenergie zwischen zwei relativ zueinander verdrehbaren Bauteilen kontaktlos übertragen werden, diese Einrichtung erfordert aber, da die ineinander angeordneten Spulen auftragen, einen großen Bauraum. Vor allem ist von Nachteil, daß eine Abschirmung nicht oder nur mit großem Bauaufwand zu bewerkstelligen und daß eine hohe Störanfälligkeit durch die gegenseitigen Magnetfelder gegeben ist. Und da die Spulen interne Wicklungskapazitäten aufweisen und die Übertragung nicht eisenlos erfolgt und demnach Verluste auftreten, ist die bekannte Einrichtung nur bis zu einer gewissen Frequenz verwendbar. Der Einsatzbereich dieser Einrichtung ist demnach beschränkt.

Aufgabe der Erfindung ist es daher, die Einrichtung zur Übertragung von elektrischer Energie der eingangs genannten Gattung in der Weise auszubilden, daß zwischen relativ zueinander verstellbaren Bauteilen gleichzeitig auch Wechselsignalen übertragen werden können. Dabei soll die Begrenzung der Leistungsübertragung nur durch die jeweilige Baugröße begrenzt sein, auch soll eine hohe Datenrate übertragen werden können, und zwar jeweils in beiden Richtungen. Des weiteren soll die Einrichtung nicht nur sehr einfach in ihrer konstruktiven Ausgestaltung und damit wirtschaftlich herzustellen sein, sondern auch klein bauen und äußerst vielseitig eingesetzt werden können. Ferner soll eine besondere Abschirmung der zur Übertragung der Wechselsignale vorgesehenen Sender und Empfänger gegen die Störfelder der Einrichtung zur Übertragung von elektrischer Energie nicht erforderlich sein.

Gemäß der Erfindung wird dies bei einer Einrichtung von elektrischer Energie der vorgenannten Art dadurch bewerkstelligt, daß zur kontaktlosen Übertragung von Wechselsignalen im unmittelbaren Bereich der Primärwicklung und der Sekundärwicklung des Transformators außerhalb dessen Hauptfeldes, beispielsweise ganz oder teilweise im Wickelfenster und/oder im Bereich der Sekundärwicklung des Transformators, eine flächig ausgebildete Senderantenne und eine flächig ausgebildete Empfangsantenne angeordnet sind, die wechselweise an eine Sender- und eine Empfangselektronik anschließbar und mit der Primärwicklung der Sekundärwicklung und/oder dem Kern des Transformators zu einer Baueinheit zusammengefaßt sind.

Zweckmäßig ist es hierbei, die Antennen auf einem vorzugsweise starren Träger aus einem isolierenden Werkstoff anzubringen und unmittelbar einander gegenüberliegend anzuordnen und den Träger als Platte, als Scheibe, als Zylinder, als Kugel oder als Quader auszubilden.

Zur induktiven Übertragung von Wechselsignalen können die Antennen jeweils durch einen oder mehrere flächig auf dem Träger angeordnete in sich geschlossene Leiter, beispielsweise nach Art einer Leiterschleife oder einer gedruckten Platine, gebildet sein, wobei die Leiterschleifen in Form eines Rechteckes oder Polygons oder eines unterbrochenen Kreis- oder Rechteckringes angeordnet sein können.

Zur kapazitiven Übertragung von Wechselsignalen können die Antennen jeweils durch einen oder mehrere flächig auf dem Träger angeordnete Kondensatoren, vorzugsweise in Form einer Metallfolie, eines metallisierten Lackfilmes oder durch eine Platine, gebildet sein.

Bei dieser Ausgestaltung der Antennen können die Kondensatoren jeweils in Form zweier Kämme mit von vorzugsweise mittig auf dem Träger angebrachten Verbindungsstegen nach außen abstehenden und mit seitlichem Abstand zueinander angeordneten Kondensatorplatten gebildet werden, es ist aber auch möglich, die Kondensatoren jeweils aus zwei oder mehreren konzentrisch ineinander auf dem Träger angeordneten ringförmig gestalteten Kondensatorplatten zu bilden, die mit vorzugsweise radial gerichteten Schlitzen versehen sein können.

Zur induktiven und/oder kapazitiven Übertragung von Wechselsignalen können die Antennen aber auch aus in sich geschlossenen Leitern und Kondensatoren bestehen, wobei kammartig ausgebildete Kondensatoren innerhalb rechteckig gestalteter oder in Form eines unterbrochenen Reckteckringes ausgebildeter Leiterschleifen angeordnet oder ringförmig gestaltete und vorzugsweise mit radial gerichteten Schlitzen versehene Kondensotoren innerhalb einer in Form eines durchbrochenen Kreisringes ausgebildeten Leiterschleife eingesetzt sein können.

Um das Übertragungsverhalten zu verbessern, ist es ferner angezeigt, die Träger auf der den Antennen abgekehrten Seite jeweils mit einer flächig ausgebildeten Abschirmung zu versehen.

Auch die Abschirmungen können als Kondensatoren genutzt und zur Übertragung von Wechselsignalen verwendet werden; dazu ist es lediglich erforderlich, die Abschirmungen der Träger jeweils an eine Sende- und Empfangselektronik anzuschliessen.

Des weiteren kann auch der Kern des Transformators als Kondensator genutzt werden. Um dies zu ermöglichen, sollten die beiden Hälften des Kerns an eine Sende- und Empfangselektronik angeschlossen sein, wobei es angebracht ist, die beiden äusseren parallel zu dem zwischen den beiden Hälften des Kerns vorgesehenen Luftspalte verlaufenden Stirnflächen des Kerns mit einer elektrisch leitenden Beschichtung, z.B. in Form eines metallischen Lackfilms zu versehen.

Die durch die Abschirmungen der Träger und die Hälften des Kerns gebildeten Kondensatoren sind hierbei zweckmäßigerweise an eine gemeinsame Sende- und Empfangselektronik anzuschließen und im Gegentakt zu schalten.

Zur induktiven Übertragung von Wechselsignalen können nach einer weiteren Ausführungsvariante die beiden Hälften des Kerns jeweils mit einer orthogonal zur Primärwicklung und zur Sekundärwicklung angeordneten Wicklung versehen werden.

Nach einer vorteilhaften Weiterbildung können die Primärwicklung und die Sekundärwicklung des Transformators und/oder die Antennen auch relativ zueinander verstellbar, vorzugsweise gegeneinander linear verschiebbar oder verdrehbar, angeordnet werden, bei zwei liniar gegeneinander verstellbar angeordneten Wicklungen und/oder Antennen ist es angebracht, diese in Verstellrichtung unterschiedlich groß auszubilden.

Um den Einsatzbereich zu erhöhen, können einer oder mehrere Primärwicklungen des Transformators eine oder mehrere Sekundärwicklungen zugeordnet werden, und einer oder mehreren der Primärwicklungen zugeordnete Antennen können einer oder mehreren der Sekundärwicklungen zugeordneten Antennen gegenüberstehend angeordnet werden.

Sehr vorteilhaft ist es ferner, die Antennen paarweise im Wickelfenster des Transformators, vorzugsweise in Form eines unterbrochenen Kreisringes oder eines Rechteckes, ein- oder mehrfach anzuordnen oder daß die Antennen in Form eines oder mehrerer rechteckiger unterbrochener Ringe die Schenkel des Kerns umgeben.

Angezeigt ist es auch, die Antennen einzeln oder gemeinsam in einem diese ganz oder teilweise umgebenden Gehäuse, vorzugsweise aus einem ferromagnetischen Werkstoff, einzusetzen.

Wird eine Einrichtung zur Übertragung von Energie gemäß der Erfindung mit in besonderer Weise ausgebildeten Antennen versehen, so ist es möglich, nicht nur kontaktlos hohe Leistungen im Kilowattbereich zu übertragen, sondern es ist auch eine kraftfreie und berührungslose Übertragung von analogen oder digitalen Wechselsignalen von einem Sender zu einem Empfänger problemlos bei störungsfreiem Betrieb zu bewerkstelligen, wobei auch eine hohe Datenübertragungsrate gegeben ist. Werden nämlich der Sender und der Empfänger als flächige auf einem starren Träger aufgebrachte und unmittelbar einander gegenüberliegend angeordnete Antennen ausgebildet, können diese auf sehr einfache Weise gegen Störfelder der Transformatorspulen abgeschirmt werden. Die Leistungsübertragung ist hierbei nur durch die jeweilige Baugröße begrenzt. Und da die vorschlagsgemäß gestaltete Einrichtung ein geringes Eigengewicht aufweist, klein baut und somit nur wenig Bauraum zu deren Unterbringung erforderlich ist, ist diese vielseitig einsetzbar.

In der Zeichnung sind einige Ausführungsbeispiele der gemäß der Erfindung ausgebildeten Übertragungseinrichtung dargestellt, die nachfolgend im einzelnen erläutert sind. Hierbei zeigt, meist in schematischer Darstellung:
- Figur 1: eine als Transformator ausgebildete Einrichtung zur Übertragung von Energie mit Sender und Empfänger zur kontaktlosen Übertragung von Wechselsignalen,
- Figur 2: eine der Übertragungseinrichtung nach Figur 1 nachgeschaltete Übertragungseinrichtung,
- Figur 3: eine andersartige Ausgestaltung der Übertragungseinrichtungen nach den Figuren 1 und 2,
- Figur 4: zwei auf einem planen Träger angeordnete als Leiterschleifen ausgebildete Antennen zur induktiven Wechselsignalübertragung bei den Einrichtungen nach den Figuren 1 bis 3,
- Figur 5: zwei aus Kondensatoren bestehende Antennen zur kapazitiven Übertragung von Wechselsignalen bei den Einrichtungen nach den Figuren 1 bis 3,
- Figur 6: eine Einrichtung gemäß den Figuren 4 und 5 zur induktiven und kapazitiven Signalübertragung bei den Einrichtungen nach den Figuren 1 bis 3,
- Figur 7: die Einrichtung nach Figur 6 mit auf den Rückseiten der Träger angeordneten als Kondensatoren wirksame Abschirmungen im Schnitt,
- Figur 8: einen Transformator in einem Axialschnitt mit in dessen Wickelfeld angeordneten Antennen nach den Figuren 6 und 7,
- Figur 9: einen Schnitt nach der Linie IX-IX der Figur 8,
- Figur 10: einen Transformator in einem Axialschnitt mit den Kern umfassenden Antennen nach Art der Figur 6,
- Figur 11: einen Schnitt nach der Linie XI-XI der Figur 10,
- Figur 12: einen Transformator in einem Axialschnitt mit in dessen Wickelfeld angeordneten Antennen nach Art der Figur 6,
- Figur 13: einen Schnitt nach der Linie XIII-XIII der Figur 12,
- Figur 14: eine andersartige Ausgestaltung eines mit Antennen versehenen Transformators nach den Figuren 10 und 11,
- Figur 15: einen kreisförmig ausgebildeten Transformator mit in dessen Wickelfeld angeordneten Antennen,
- Figur 16: einen Schnitt nach der Linie XV-XV,
- Figur 17: einen mehrstufig ausgebildeten mit Antennen ausgestatteten Transformator, ebenfalls in einem Axialschnitt,
- Figur 18: einen mit gegeneinander verdrehbaren Antennen versehenen Transformator und
- Figuren 19 und 20: Übertragungseinrichtungen mit gegeneinander linear verstellbaren Bauteilen.

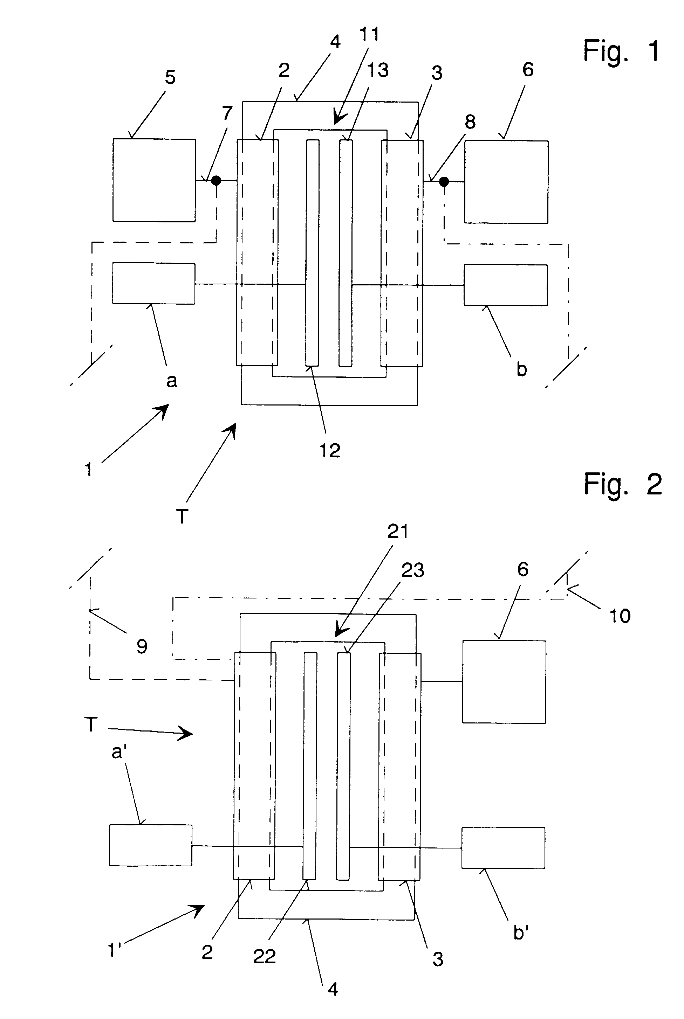

Die in Figur 1 schematisch dargestellte und mit 1 bezeichnete Einrichtung dient zur Übertragung von elektrischer Energie sowie von Wechselsignalen zwischen einer Sendeelektronik a und einer Empfängerelektronik b und besteht aus einem Transformator T, der durch eine Primärwicklung 2, einer Sekundärwicklung 3 und einem Kern 4 gebildet ist, und einer Datenübertragungseinrichtung 11. An die Primärwicklung 2 des Transformators T ist hierbei über eine Leitung 7 ein Umrichter 5 angeschlossen, die Sekundärwicklung 3 ist ebenfalls über eine Leitung 8 mit einem Umrichter 6 verbunden.

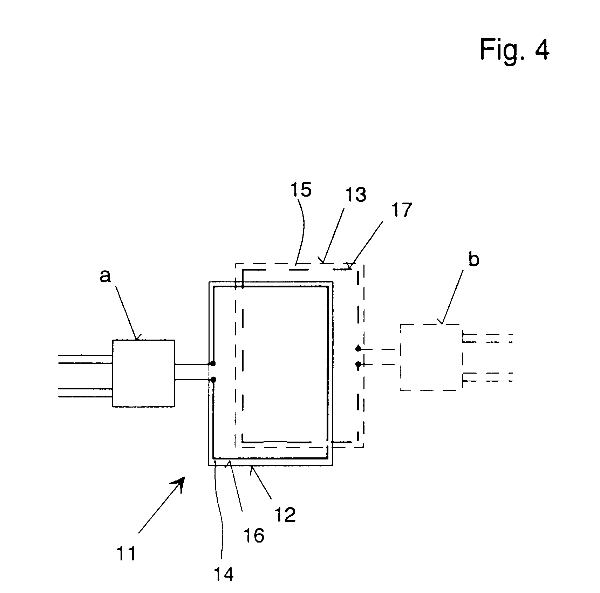

Die Datenübertragungseinrichtung 11 weist zwei einander gegenüberliegend angeordnete in Figur 4 im einzelnen dargestellte flächig ausgebildete Antennen 12 und 13 auf, die als Sender bzw. Empfänger wirksam sind. Die Antennen 12 und 13 sind jeweils durch eine auf einem starren Träger 14 bzw. 15 aus einem isolierenden Werkstoff aufgebrachte, in sich geschlossene Leiterschleifen 16 bzw. 17 gebildet, die rechteckig und in einer Ebene verlaufend angeordnet sind.

Bei einer Übertragung von Wechselsignalen wird, je nachdem welche der Antennen 12 und 13 als Sender wirksam ist, in dieser ein Magnetfeld erzeugt, durch das in der als Empfänger wirksamen Antenne 13 oder 12 eine Spannung hervorgerufen wird, die mit Hilfe der an diese angeschlossenen Empfängerelektronik b bzw. a ausgewertet werden kann.

Bei einer Energieübertragung von der Primärwicklung 2, die dieser von dem Umrichter 5 zugeführt wird, in die Sekundärwicklung 3 des Transformators T wird in dieser entsprechend der wechselnden Magnetisierung des Kernes 4 ein Wechselstrom gleicher Frequenz induziert, der in dem Umrichter 6 z. B. in eine Gleichspannung zur Speisung eines Motors umgewandelt wird. Die dabei auftretenden Störfelder wirken sich aufgrund der besonderen Gestaltung der Antennen 12 und 13 nicht auf die Datenübertragungseinrichtung 11 aus, so daß mittels dieser auch während einer Übertragung von elektrischer Energie Wechselsignale übertragen werden können.

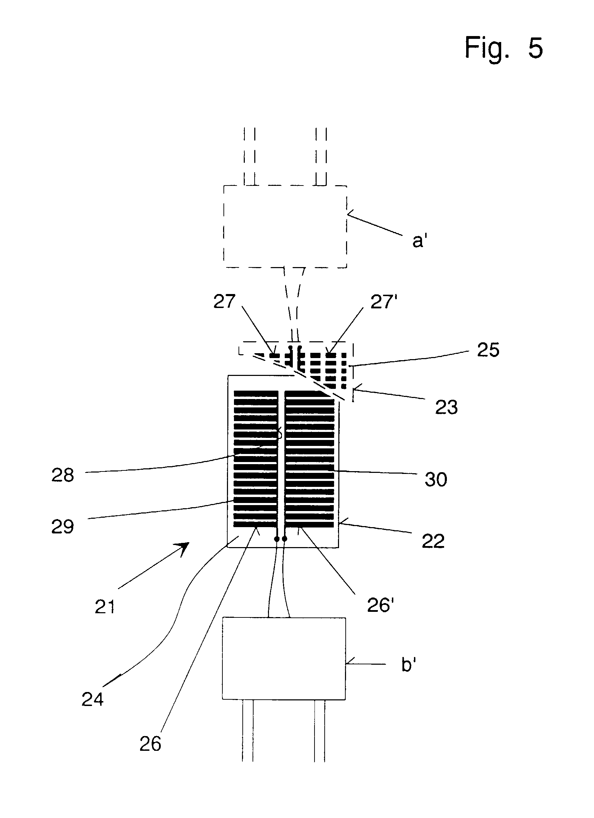

Bei der Einrichtung 1' nach Figur 2, die in ihrem Aufbau der Einrichtung 1 nach Figur 1 entspricht, ist eine Datenübertragungseinrichtung 21 zur kapazitiven Übertragung von Wechselsignalen vorgesehen. Die einander gegenüberliegend angeordneten und an eine Sendeelektronik a' und eine Empfängerelektronik b' angeschlossenen gemäß Figur 5 ausgebildeten Antennen 22 und 23 sind hierbei durch auf starren Trägern 24 und 25 angebrachte Kondensatoren 26, 26' bzw. 27, 27' gebildet.

Damit keine Wirbelströme durch Magnetfelder entstehen, sind die einander gegenüberliegenden jeweils gleich groß bemessenen Kondensatoren 26, 26' bzw. 27, 27' in besonderer Weise gestaltet. An etwa mittig auf den Trägern 24 und 25 angeordneten Verbindungsstegen 28 sind hierbei jeweils nach außen abstehende Kondensatorplatten 29 angebracht, so daß Schlitze 30 gebildet sind. Und um Störungen durch gleichtaktige Signale unterdrücken zu können, sind jeweils Doppelkondensatoren 26, 26' bzw. 27, 27' vorgesehen.

Die Einrichtung 1' ist an die Einrichtung nach Figur 1 angeschlossen. Dies kann wahlweise mittels Leitungen 9 oder 10 erfolgen, die mit den Verbindungsleitungen 7 oder 8 zwischen den Umrichtern 5 bzw. 6 und der Primärspule 2 bzw. der Sekundärspule 3 des Transformators T verbunden werden können. Auf diese Weise ist eine ein- oder mehrfache Kaskadierung sowohl auf der Primär- als auch auf der Sekundärseite des Transformators T' zu bewerkstelligen.

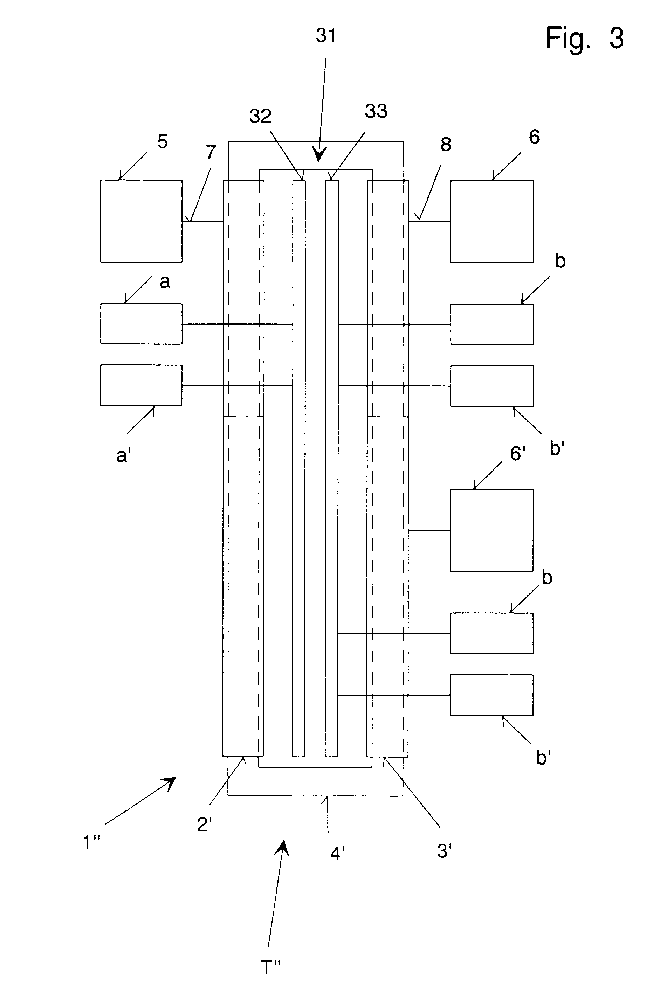

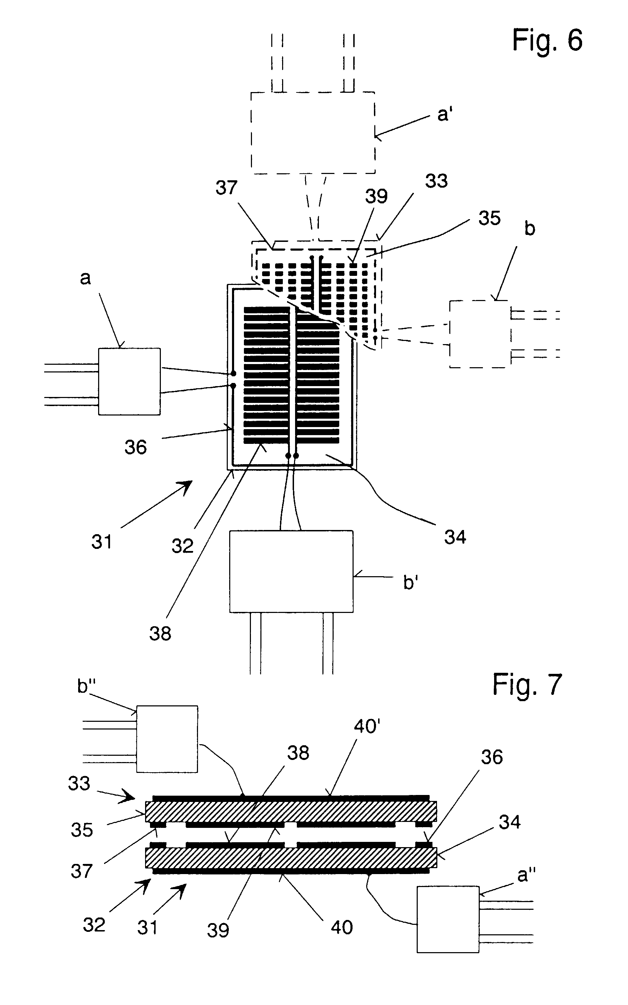

Bei der Übertragungseinrichtung 1'' nach Figur 3 weist die Datenübertragungseinrichtung 31 gegenüberliegend angeordnete Antennen 32 und 33 auf, die gemäß Figur 6 ausgebildet und zur induktiven und kapazitiven Übertragung von Wechselsignalen geeignet sind. Um dies zu ermöglichen, sind auf Trägern 34 und 35 jeweils in sich geschlossene Leiter in Form von Leiterschleifen 36 bzw. 37, die mit der Sendeelektronik a und der Empfängerelektronik b verbunden sind, sowie an die Sendelektronik a' und die Empfängerelektronik b' angeschlossene Kondensatoren 38 bzw. 39 aufgebracht, und zwar jeweils in einer Ebene. Mit der Datenübertragungseinrichtung 31 können somit Wechselsignale auf zwei Kanälen übertragen werden.

An die Sekundärwicklung 3' des Transformators T'', der Energie von der Primärwicklung 2' durch wechselnde Magnetiesierung des Kerns 4'' zugeführt wird, ist hierbei ein weiterer Umrichter 6' angeschlossen und die Antenne 33 ist mit zwei weiteren Empfängerelektroniken b und b' verbunden. Ein zusätzlicher Verbraucher kann somit mit Energie gespeist und es können Daten auf vier Kanälen übertragen werden. Selbstverständlich ist es, wie dies strichpunktiert eingezeichnet ist, möglich, die Übertragungseinrichtung 1'' auch nur mit zwei Kanälen zur induktiven und kapazitiven Datenübertragung auszustatten.

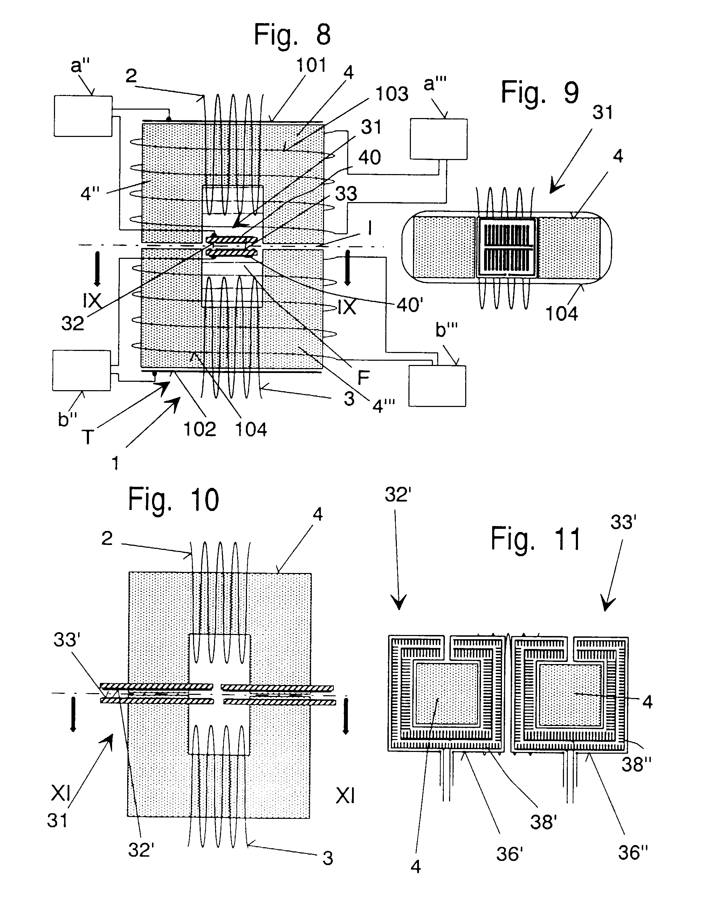

Um das Übertragungsverhalten zu verbessern können, wie dies in der Schnittzeichnung gemäß Figur 7 dargestellt ist, auf den den Antennen 32 und 33 abgekehrten Seiten der Träger 34 und 35 jeweils eine flächig ausgebildete Abschirmung 40 bzw. 40' aufgebracht sein.

Die Abschirmungen 40 und 40' können aber auch als Kondensatoren genutzt werden. Um dies zu bewerkstelligen, sind die Abschirmungen 40 und 40' jeweils an eine Sendeelektronik a" und an eine Empfangselektronik b" anzuschließen.

In den Figuren 8 bis 12 ist die mit einer Datenübertragungseinrichtung 31 versehene in Figur 1 schematisch dargestellte Einrichtung 1 in möglichen konstruktiven Ausgestaltungen wiedergegeben.

Gemäß den Figuren 8 und 9 sind die zur induktiven und kapazitiven Datenübertragung vorgesehenen Antennen 32 und 33 im Wickelfenster F des Transformators T angeordnet, nach den Figuren 10 und 11 umgeben dagegen die Antennen 32' und 33' die Schenkel des Kerns 4. Die Leiterschleifen 36' und 36'' sind hierbei in Form eines geschlitzten Rechteckringes ausgebildet, in denen die kammartig gestalteten Kondensatoren 38' und 38'' eingesetzt sind.

Bei der Ausgestaltung nach Fig. 8 werden auch der Kern 4 des Transformators T sowie die Abschirmungen 40 und 40' der Antennen 32 und 33 als Kondensatoren genutzt. Dazu ist auf den beiden äusseren parallel zu dem zwischen den Hälften 4" und 4'" des Kerns 4 vorgesehenen Luftspalt l verlaufenden Stirnflächen jeweils eine elektrisch leitende Beschichtung 101 bzw. 102 z.B. in Form eines metallischen Lackfilmes aufgebracht. Des weiteren sind die Beschichtungen 101, 102 sowie die Abschirmungen 40, 40' der Antennen 32, 33 gemeinsam an die Sendeelektronik a" bzw. die Empfangselektronik b" angeschlossen. Die durch die Beschichtungen 101 und 102 bzw. die Hälften 4" und 4'" des Kerns 4 gebildeten Kondensatoren sowie durch die Abschirmungen 40, 40' geschaffenen Kondensatoren werden mittels der Sende- und Empfangselektroniken a" bzw. b" im Gegentakt geschaltet.

Bei dem Ausführungsbeispiel nach Fig. 8 ist zur induktiven Übertragung von Wechselsignalen des weiteren vorgesehen, daß die beiden Hälften 4 " und 4'" des Kerns 4 jeweils mit einer orthogonal zur Primärwicklung 2 bzw. zur Sekundärwicklung 3 angeordneten Wicklung 103 bzw. 104 versehen sind. Dadurch wird erreicht, daß ein in der Primärwicklung 2 und/oder der Sekundärwicklung 3 fließender Strom in den Antennen 32 bzw. 33 keine Spannung induziert, da der über die Gesamtfläche der Antennen 32, 33 betrachtete Fluß zu jedem Zeitpunkt verschwindet, also identisch Null ist.

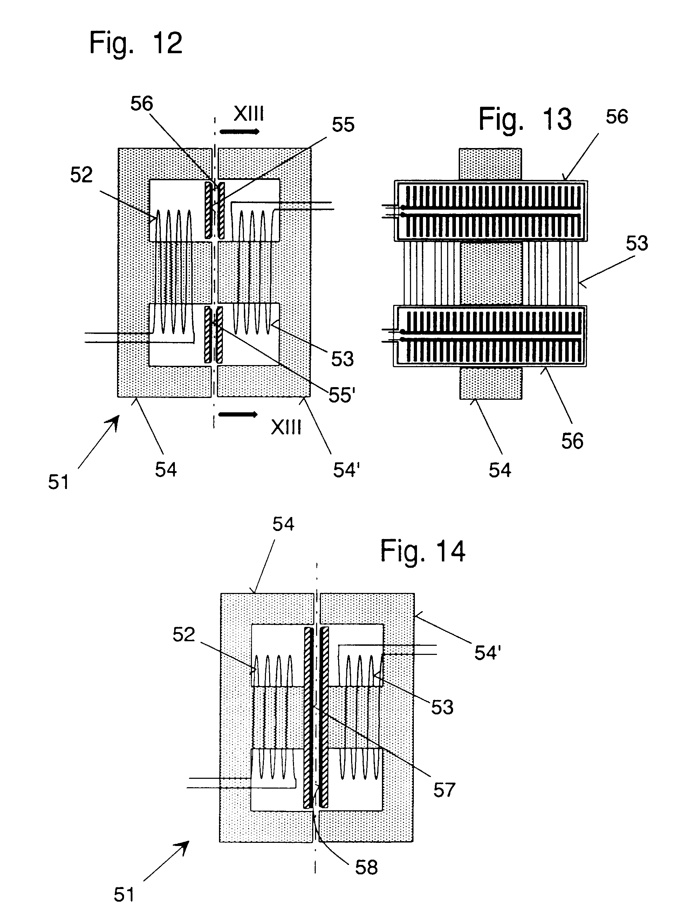

Bei der Übertragungseinrichtung 51 nach den Figuren 12 bis 14 ist zur Energieübertragung wiederum eine Primärwicklung 52, eine Sekundärwicklung 53 sowie ein zweiteiliger Kern 54, 54' vorgesehen und zur Übertragung von Wechselsignalen dienen Antennen 55 und 56 bzw. 57 und 58. Bei der Ausgestaltung nach den Figuren 12 und 13 sind die zur induktiven und kapazitiven Übertragung verwendbaren Antennen 55 und 56 zwischen den Schenkeln des Kerns 54, 54' angeordnet, bei der Ausgestaltung nach Figur 14 umschließen die Antennen 57 und 58 die mittleren Schenkel des zweiteiligen Kerns 54, 54', so daß dessen Teile auch gegeneinander verdreht werden können.

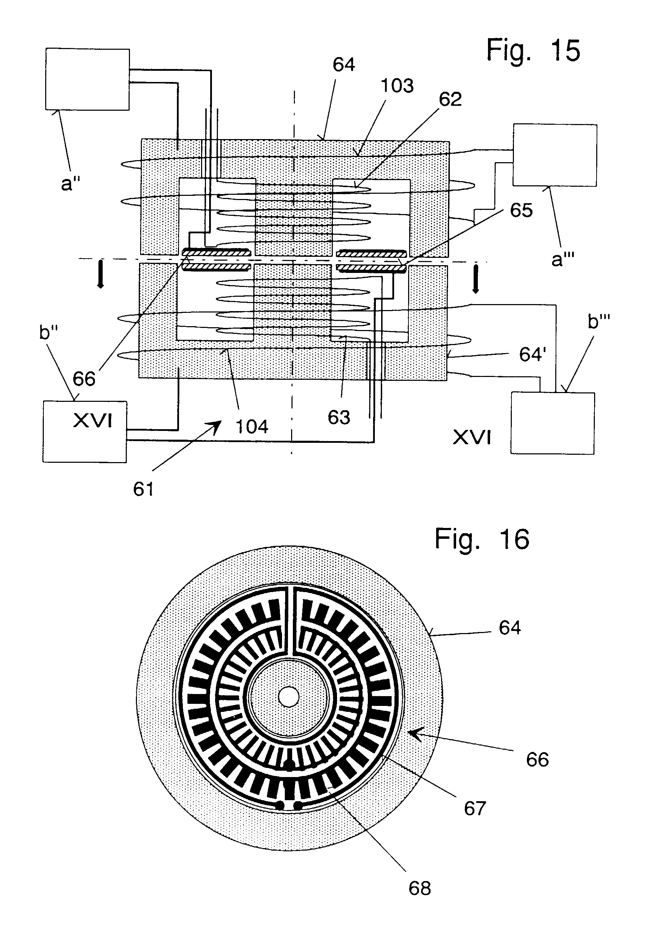

Auch bei der in den Figuren 15 und 16 dargestellten Übertragungseinrichtung 61 können die beiden Teile des Kerns 64, 64', die die Primärwicklung 62 bzw. die Sekundärwicklung 63 tragen, gegeneinander verdreht werden. Die beiden im Wickelfenster der Primärwicklung 62 und der Sekundärwicklung 63 angeordneten Antennen 65 und 66 bestehen hierbei, wie dies insbesondere der Figur 16 zu entnehmen ist, jeweils aus einer in Form eines unterbrochenen Kreisringes ausgebildeten Leiterschleife 67, in die ein kammartig gestalteter Kondensator 68 eingesetzt ist.

Auch bei dem Ausführungsbeispiel nach den Figuren 15 und 16 sind die Primärwicklung 62 sowie die Sekundärwicklung 63 mit ortogonal zu diesen angeordneten Wicklungen 103 und 104 versehen, so daß Wechselsignale induktiv übertragen werden können. Des weiteren sind die beiden Teile des Kerns 64, 64' jeweils an die Sende- und Empfangselektroniken a" bzw. b" angeschlossen, die beiden Teile des Kerns 64, 64' sind somit als Kondensator nutzbar.

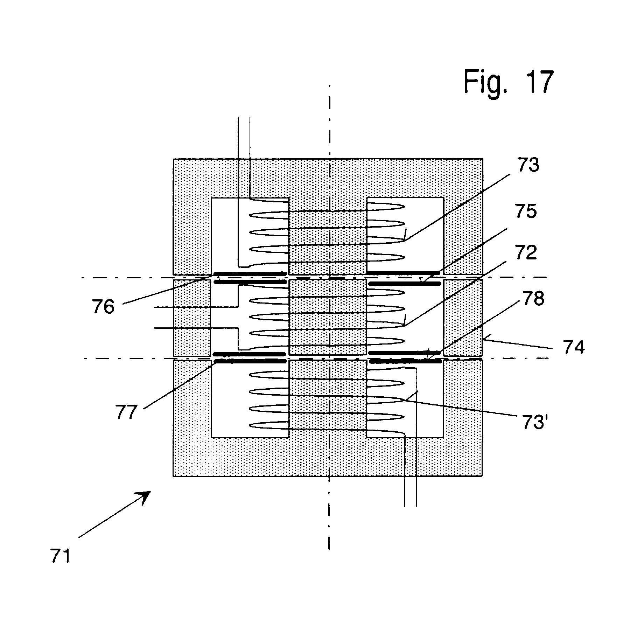

Die in Figur 17 dargestellte Übertragungseinrichtung 71 entspricht etwa der Ausgestaltung nach Figur 3. Einer Primärwiclung 72 sind hierbei zwei Sekundärwicklungen 73 und 73' zugeordnet, so daß mit Hilfe des zu magnetisierenden Kerns 74 zwei Verbraucher mit Energie versorgt werden können. Außerdem sind vier jeweils paarweise einander angeordnete Antennen 75 und 76 bzw. 77 und 78 vorgesehen, so daß Wechselsignale auf zwei Kanälen übertragbar sind.

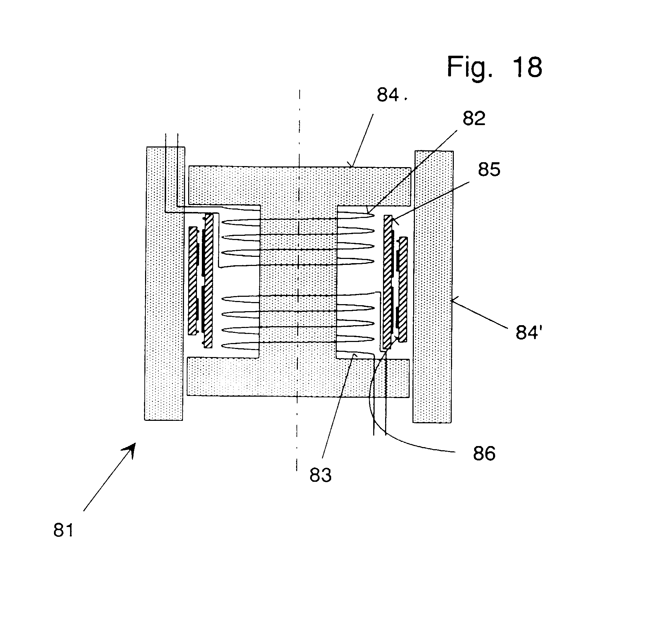

Bei der Übertragungseinrichtung 81 nach Figur 18 ist der Kern 84, 84' zweigeteilt, wobei der Kernteil 84 die Primärwicklung 82 sowie die Sekundärwicklung 83 und eine Antenne 85 trägt. Eine mit dieser zusammenwirkende weitere Antenne 86 ist an dem Kernteil 84' angebracht, das gegenüber dem Kernteil 84 verdrehbar ist.

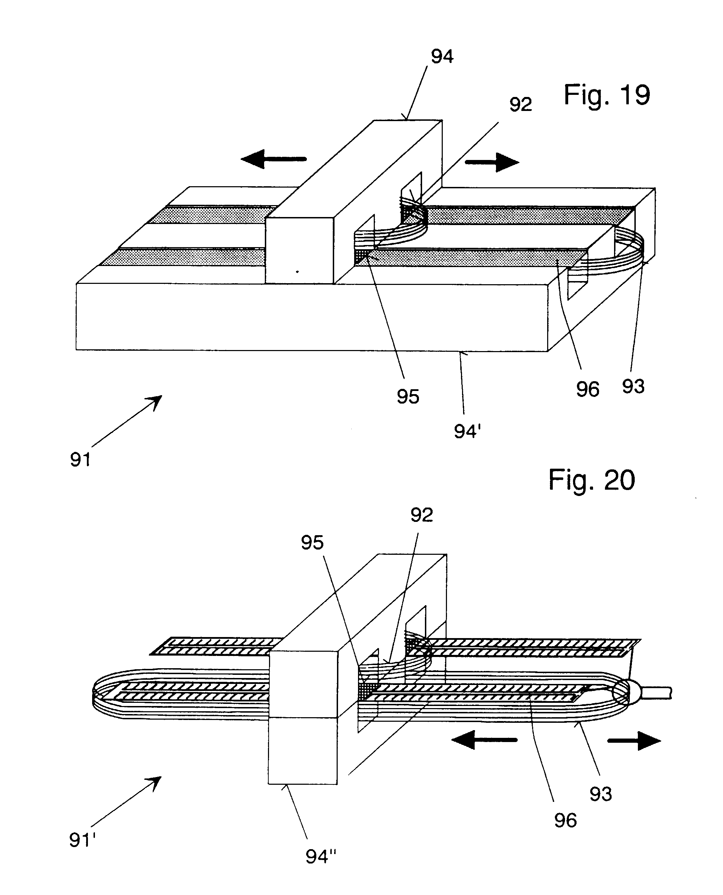

Gemäß den Figuren 19 und 20 sind die die Übertragungseinrichtungen 91 bzw. 91' bildenden Bauteile gegeneinander linear verstellbar. Gemäß Figur 19 ist der die Primärwicklung 92 tragende Kernteil 94 gegenüber dem mit der Sekundärwicklung 93 versehenen Kernteil 94' axial verschiebbar, eine an dem Kernteil 94 vorgesehene Antenne 95 ist somit ebenfalls gegenüber einer an dem Kernteil 94' angeordneten Antenne 96 in gleicher Weise verstellbar. Bei der Ausgestaltung nach Figur 20 können dagegen die Sekundärwicklung 93 und die entsprechend groß gestaltete Antenne 96 gegenüber der an dem ortsfest angeordneten Kern 94'' angebrachten Primärwicklung 92 sowie der ebenfalls an diesem abgestützten Antenne 96 linear verstellt werden.

## Patentansprüche

1. Einrichtung (1) zur Übertragung von elektrischer Energie in Form eines Transformators (T), der eine Primärwicklung (2), eine Sekundärwicklung (3) sowie einen Kern (4) aus ferromagnetischem Material aufweist,
**dadurch gekennzeichnet**,
daß zur kontaktlosen Übertragung von Wechselsignalen im unmittelbaren Bereich der Primärwicklung (2) und der Sekundärwicklung (3) des Transformators (T), aber außerhalb dessen Haupffeldes, beispielsweise ganz oder teilweise im Wickelfenster (F) und/oder im Bereich der Schenkelenden des Transformators (T), eine flächig ausgebildete Sendeantenne (12; 22; 32) und eine flächig ausgebildete Empfangsantenne (13; 23; 33) angeordnet sind, die wechselweise an eine Sender- und an eine Empfangselektronik (a, a' bzw. b, b') anschließbar und mit der Primärwicklung (2), der Sekundärwicklung (3) und/oder dem Kern (4) des Transformators (T) zu einer Baueinheit zusammengefaßt sind.

2. Einrichtung nach Anspruch 1,
**dadurch gekennzeichnet,**
daß die Antennen (12, 13; 22, 23; 32, 33) auf einem vorzugsweise starren Träger (14, 15; 24, 25; 34, 35) aus einem isolierenden Werkstoff angebracht und unmittelbar einander gegenüberliegend angeordnet sind.

3. Einrichtung nach Anspruch 1 oder 2,
**dadurch gekennzeichnet,**
daß die Träger (14, 15; 24, 25; 34, 35) als Platte, als Scheibe, als Zylinder, als Kugel oder als Quader ausgebildet sind.

4. Einrichtung nach einem der Ansprüche 1 bis 3,
**dadurch gekennzeichnet,**
daß zur induktiven Übertragung von Wechselsignalen die Antennen (12, 13; 32, 33; 42; 65, 66) jeweils durch einen oder mehrere flächig auf dem Träger (14; 15; 34, 35) angeordnete in sich geschlossene Leiter, beispielsweise nach Art einer Leiterschleife (16, 17; 36, 37; 67) oder einer gedruckten Platine, gebildet sind.

5. Einrichtung nach Anspruch 4,
**dadurch gekennzeichnet,**
daß die Leiterschleifen (16, 17; 36, 37) in Form eines Rechteckes oder eines Polygons angeordnet sind.

6. Einrichtung nach Anspruch 4,
**dadurch gekennzeichnet,**
daß die Leiterschleifen (36, 36''; 67) in Form eines unterbrochenen Kreis- oder Rechteckringes angeordnet sind.

7. Einrichtung nach einem der Ansprüche 1 bis 3,
**dadurch gekennzeichnet,**
daß zur kapazitiven Übertragung von Wechselsignalen die Antennen (22, 23; 32, 33) jeweils durch einen oder mehrere flächig auf dem Träger (24, 25; 34, 35) angeordneten Kondensatoren (26, 26'; 27, 27'; 38, 39), vorzugsweise in Form einer Metallfolie, eines metallisierten Lackfilmes oder durch eine Platine (44), gebildet sind.

8. Einrichtung nach Anspruch 7,
**dadurch gekennzeichnet,**
daß die Kondensatoren (26, 26'; 27, 27') jeweils in Form zweier Kämme mit von vorzugsweise mittig auf dem Träger (24, 25) angebrachten Verbindungsstegen nach außen abstehenden und mit seitlichem Abstand zueinander angeordneten Kondensatorplatten (29) ausgebildet sind.

9. Einrichtung nach Anspruch 7,
**dadurch gekennzeichnet,**
daß die Kondensatoren (68) jeweils aus zwei oder mehreren konzentrisch ineinander auf dem Träger angeordneten ringförmig gestalteten Kondensatorplatten gebildet sind.

10. Einrichtung nach Anspruch 9,
**dadurch gekennzeichnet,**
daß die Kondensatoren (68) mit vorzugsweise radial gerichteten Schlitzen versehen sind.

11. Einrichtung nach einem der Ansprüche 1 bis 10,
**dadurch gekennzeichnet,**
daß die Antennen (32, 33; 56; 65) jeweils durch in sich geschlossene Leiter (Leiterschleifen 36, 37; 67) und Kondensatoren (38, 39; 68) zur induktiven und/oder kapazitiven Übertragung der Wechselsignale gebildet sind.

12. Einrichtung nach Anspruch 11,
**dadurch gekennzeichnet,**
daß kammartige Kondensatoren (38, 39) innerhalb rechteckig gestalteter oder in Form eines unterbrochenen rechteckigen Ringes ausgebildeter Leiterschleifen (36, 37) angeordnet sind.

13. Einrichtung nach Anspruch 11,
**dadurch gekennzeichnet,**
daß ringförmig gestaltete und vorzugsweise mit radial gerichteten Schlitzen versehene Kondensatoren (68) innerhalb einer in Form eines durchbrochenen Kreisringes ausgebildete Leiterschleife (67) eingesetzt sind.

14. Einrichtung nach einem der Ansprüche 1 bis 13,
**dadurch gekennzeichnet,**
daß die Träger (34, 35) auf der den Antennen (32, 33) abgekehrten Seiten jeweils mit einer flächig ausgebildeten Abschirmung (40, 40') versehen sind.

15. Einrichtung nach Anspruch 14,
**dadurch gekennzeichnet,**
daß zur Übertragung von Wechselsignalen die Abschirmungen (40, 40') der Träger (34, 35) jeweils an eine Sende- und Empfangselektronik (a'', b'') angeschlossen sind.

16. Einrichtung einem der Ansprüche 1 bis 15,
**dadurch gekennzeichnet,**
daß zur Nutzung des Kerns (4; 64) des Transformators (T) als Kondensator dessen Hälften (4", 4'") jeweils an eine Sende- und Empfangselektronik (a", b") angeschlossen sind.

17. Einrichtung nach Anspruch 16,
**dadurch gekennzeichnet**,
daßdie beiden äusseren parallel zu dem zwischen den beiden Hälften (4", 4'") des Kerns (4) vorgesehenen Luftspalt (1) verlaufenden Stirnflächen des Kerns (4) mit einer elektrisch leitenden Beschichtung (101, 102), z.B. in Form eines metallischen Lackfilms, versehen sind.

18. Einrichtung nach einem der Ansprüche 14 bis 17,
**dadurch gekennzeichnet,**
daß die durch die Abschirmungen (40, 40') der Träger (34, 35) und die Hälften (4", 4'") des Kerns (4) gebildeten Kondensatoren an eine gemeinsame Sende- und Empfangselektronik (a", b") angeschlossen und im Gegentakt schaltbar sind.

19. Einrichtung nach einem der Ansprüche 1 bis 18,
**dadurch gekennzeichnet,**
daß zur induktiven Übertragung von Wechselsignalen die beiden Hälften (4", 4'") des Kerns (4) jeweils mit einer orthogonal zur Primärwicklung (2) und zur Sekundärwicklung (3) angeordneten, vorzugsweise an eine Sende- und Empfangselektronik (a'" bzw. b'") angeschlossenenen Wicklung (103 bzw. 104) versehen sind.

20. Einrichtung nach einem der Ansprüche 1 bis 19,
**dadurch gekennzeichnet**,
daß die Primärwicklung (52; 62; 92) und die Sekundärwicklung (53; 63; 93) des Transformators und/oder die Antennen (85, 86; 95, 96) relativ zueinander verstellbar, vorzugsweise gegeneinander linear verschiebbar oder verdrehbar, angeordnet sind.

21. Einrichtung nach Anspruch 20,
**dadurch gekennzeichnet,**
daß bei zwei linear gegeneinander verstellbar angeordneten Wicklungen (92, 93) und/oder Antennen (95, 96) diese in Verstellrichtung unterschiedlich groß ausgebildet sind.

22. Einrichtung nach einem der Ansprüche 1 bis 21,
**dadurch gekennzeichnet**,
daß einer oder mehreren Primärwicklungen (72) des Transformators eine oder mehrere Sekundärwicklungen (73, 73') zugeordnet sind, und daß einer oder mehreren den Primärwicklungen (72) zugeordnete Antennen (75, 77) einer oder mehreren der Sekundärwicklungen (73, 73') zugeordneten Antennen (76, 78) gegenüberstehen.

23. Einrichtung nach einem der Ansprüche 1 bis 22,
**dadurch gekennzeichnet,**
daß die Antennen (31, 32; 55, 56) paarweise im Wickelfenster (F) des Transformators (T), vorzugsweise in Form eines unterbrochenen Rechteckes der eines kreisförmigen Ringes ein- oder mehrfach, angeordnet sind.

24. Einrichtung nach einem der Ansprüche 1 bis 22,
**dadurch gekennzeichnet,**
daß die Antennen (32', 33') in Form eines oder mehrerer rechteckiger unterbrochener Ringe die Schenkel des Kerns (4) umgeben.

25. Einrichtung nach einem der Ansprüche 1 bis 24,
**dadurch gekennzeichnet,**
daß die Antennen einzeln oder gemeinsam in einem diese ganz oder teilweise umgebenden Gehäuse, vorzugsweise aus einem ferromagnetischen Werkstoff, eingesetzt sind.

## Claims

1. A device (1) for transmitting electrical energy in the form of a transformer (T) with a primary winding (2), a secondary winding (3) and a core (4) made from ferromagnetic metal,
**characterised in that,**
a flat transmitter antenna (12; 22; 32) and a flat receiver antenna (13; 23; 33) are arranged in order to transmit alternating signals in the immediate vicinity of the primary winding (2) and the secondary winding (3) of the transformer (T), but beyond its main field, for example fully or partially in the winding window (F) and/or in the area of the ends of the legs of the transformer (T), with the possibility for the flat transmitter antenna (12; 22; 32) and the flat receiver antenna (13; 23; 33) to be connected alternately to an electronic transmitter and receiver control unit (a, a' or b, b') and combined with the primary winding (2), the secondary winding (3) and/or the core (4) of the transformer (T) to produce one unit.

2. The device in accordance with claim 1,
**characterised in that**,
the antennas (12, 13; 22, 23; 32, 33) are mounted on a carrier (14, 15; 24, 25; 34, 35) which, in a preferred embodiment, is rigid and which is made from an insulating material, with the mounting undertaken in such a way that the antennas are arranged directly opposite one another.

3. The device in accordance with claim 1 or 2,
**characterised in that**,
the carriers (14, 15; 24, 25; 34, 35) take the form of a plate, disc, cylinder, ball or cuboid.

4. The device in accordance with one of claims 1 to 3,
**characterised in that,**
in order to transmit alternating signals inductively, each of the antennas (12, 13; 32, 33; 42; 65, 66) are formed by one or more self-contained conductors arranged flat on the carrier (14; 15; 34, 35), for example in the form of a conductor loop (16, 17; 36, 37; 67) or a printed circuit board.

5. The device in accordance with claim 4,
**characterised in that**,
the conductor loops (16, 17; 36, 37) are arranged in the form of a rectangle or a polygon.

6. The device in accordance with claim 4,
**characterised in that**,
the conductor loops (36, 36"; 36) are arranged in the form of an interrupted circular or rectangular ring.

7. The device in accordance with one of claims 1 to 3,
**characterised in that**,
in order to transmit alternating signals capacitively, each of the antennas (22, 23; 32, 33) are formed by one or more capacitors (26, 26'; 27, 27'; 38, 39) arranged flat on the carrier (24; 25; 34, 35), with the capacitors (26, 26'; 27, 27'; 38, 39) being formed by, in a preferred embodiment, a metal foil, a metal-coated enamel film or a printed circuit board (44).

8. The device in accordance with claim 7,
**characterised in that,**
each of the capacitors (26, 26'; 27, 27') is formed by two combs with capacitor plates (29) arranged at a lateral distance to one another and projecting outwards from connecting webs attached, in a preferred embodiment, to the middle of the carrier (24, 25).

9. The device in accordance with claim 7,
**characterised in that**,
each of the capacitors (68) is formed by two or more capacitor plates arranged concentrically one inside the other on the carrier and configured in an annular shape.

10. The device in accordance with claim 9,
**characterised in that**,
the capacitors (68) are provided with slots arranged, in a preferred embodiment, in a radial direction.

11. The device in accordance with one of claims 1 to 10,
**characterised in that**,
each of the antennas (32, 33; 56; 65) is formed by self-contained conductors (conductor loops 36, 37; 67) and capacitors (38, 39; 68) for the inductive and/or capacitive transmission of the alternating signals.

12. The device in accordance with claim 11,
**characterised in that**,
comb-shaped capacitors (38, 39) are arranged within conductor loops (36, 37) configured in a rectangular shape or in the form of an interrupted rectangular ring.

13. The device in accordance with claim 11,
**characterised in that**,
capacitors (68) configured in an annular shape and, in a preferred embodiment, with slots running in a radial direction are inserted within a conductor loop (67) with the form of an interrupted circular ring.

14. The device in accordance with one of claims 1 to 13,
**characterised in that**,
each of the carriers (34, 35) on the side facing away from the antennas (32, 33) has a flat shield (40, 40').

15. The device in accordance with claim 14,
**characterised in that,**
in order to transmit alternating signals, each of the shields (40, 40') of the carriers (34, 35) is connected to an electronic transmitter and receiver control unit (a", b").

16. The device in accordance with one of claims 1 to 15,
**characterised in that,**
in order to use the core (4; 64) of the transformer (T) as a capacitor, each of its halves (4", 4"') are connected to an electronic transmitter and receiver control unit (a", b").

17. The device in accordance with claim 16,
**characterised in that**,
the two outer ends of the core (4) running parallel to the gap (I) located between the two halves (4", 4"') of the core (4) are provided with an electrically conductive coating (101, 102), for example in the form of a metallic enamel film.

18. The device in accordance with one of claims 14 to 17,
**characterised in that**,
the capacitors formed by the shields (40, 40') of the carriers (34, 35) and the halves (4", 4"') of the core (4) are connected to a joint electronic transmitter and receiver control unit (a", b") and can be switched in push-pull operation.

19. The device in accordance with one of claims 1 to 18,
**characterised in that**,
in order to transmit alternating signals inductively, each half (4", 4"') of the core (4) is provided with a winding (103 or 104) arranged orthogonally to the primary winding (2) and the secondary winding (3) and, in a preferred embodiment, connected to an electronic transmitter and receiver control unit (a"' or b"').

20. The device in accordance with one of claims 1 to 19,
**characterised in that**,
the primary winding (52; 62; 92) and the secondary winding (53; 63; 93) of the transformer and/or the antennas (85, 86; 95, 96) are arranged in such a way that they can be adjusted in relation to one another and, in a preferred embodiment, can be moved in a linear fashion or twisted towards each other.

21. The device in accordance with claim 20,
**characterised in that**,
with two windings (92, 93) and/or antennas (95, 96) arranged so as to enable them to be moved towards each other in a linear fashion, the windings (92, 93) and/or antennas (95, 96) are configured with different sizes in the movement direction.

22. The device in accordance with one of claims 1 to 21,
**characterised in that**,
one or more secondary windings (73, 73') are assigned to one or more primary windings (72) of the transformer, and that one or more antennas (76, 78) assigned to the secondary windings (73, 73') are positioned opposite to one or more antennas (75, 77) assigned to the primary windings (72).

23. The device in accordance with one of claims 1 to 22,
**characterised in that**,
the antennas (31, 32; 55, 56) are arranged one or several times in pairs in the winding window (F) of the transformer (T) and take, in a preferred embodiment, the form of an interrupted rectangle or a circular ring.

24. The device in accordance with one of claims 1 to 22,
**characterised in that,**
the antennas (32', 33') surround the leg of the core (4) in the form of one or more rectangular interrupted rings.

25. The device in accordance with one of claims 1 to 24,
**characterised in that**,
the antennas are inserted individually or jointly in a housing which encompasses them fully or in part and is made, in a preferred embodiment, from a ferromagnetic material.

## Revendications

1. Dispositif (1) pour la transmission de l'énergie électrique, sous la forme d'un transformateur (T), comprenant un enroulement primaire (2), un enroulement secondaire (3) ainsi qu'un noyau en matériau ferromagnétique (4),
caractérisé en ce que
pour la transmission sans contact de signaux alternatifs, il est prévu à proximité immédiate de l'enroulement primaire (2) et de l'enroulement secondaire (3) du transformateur (T), mais à l'extérieur de son champ principal, par exemple entièrement ou partiellement dans la fenêtre d'enroulement (F) et/ou à l'endroit des extrémités des bras du transformateur (T), une antenne d'émission à surface plane (12; 22; 32) ainsi qu'une antenne de réception à surface plane (13; 23; 33) qui se laissent brancher alternativement à un système électronique d'émission et de réception (a, a' ou b, b') et qui forment une unité constructive avec l'enroulement primaire (2), l'enroulement secondaire (3) et/ou avec le noyau (4) du transformateur (T).

2. Dispositif d'après la revendication 1,
caractérisé en ce que
les antennes (12, 13; 22, 23; 32, 33) sont montées sur un support de préférence rigide (14, 15; 24, 25; 34, 35) en matériau isolant et qu'elles sont disposées opposées l'une à l'autre.

3. Dispositif d'après la revendication 1 ou 2,
caractérisé en ce que
les supports (14, 15; 24, 25; 34, 35) sont conçus sous la forme d'une plaque, d'un disque, d'un cylindre, d'une sphère ou en parallélépipède.

4. Dispositif d'après une des revendications 1 à 3,
caractérisé en ce que
pour la transmission inductive de signaux alternatifs, les antennes (12, 13; 32, 33; 42; 65, 66) sont formées par un ou par plusieurs conducteurs à surface plane et fermés hermétiquement, disposés sur le support (14; 15; 34, 35) et conçus sous la forme d'une boucle conductrice (16, 17; 36, 37; 67) ou d'un circuit imprimé.

5. Dispositif d'après la revendication 4,
caractérisé en ce que
les boucles conductrices (16, 17; 36, 37) sont disposées sous la forme d'un rectangle ou d'un polygone.

6. Dispositif d'après la revendication 4,
caractérisé en ce que
les boucles conductrices (36, 36"; 67) sont disposées sous la forme d'un cercle ou d'un anneau à section rectangulaire interrompus.

7. Dispositif d'après une des revendications 1 à 3,
caractérisé en ce que
pour la transmission capacitive de signaux alternatifs, les antennes (22, 23; 32, 33) sont formées respectivement par un ou par plusieurs condensateurs à surface plane (26, 26'; 27, 27'; 38, 39) disposés sur le support (24, 25; 34, 35) et conçus de préférence sous la forme d'une feuille métallique, d'un film de laque métallisée ou d'une platine (44).

8. Dispositif d'après la revendication 7,
caractérisé en ce que
les condensateurs (26, 26'; 27, 27') sont conçus respectivement sous la forme de deux peignes avec des plaques condensateurs (29) saillant vers l'extérieur sur des traverses de raccordement prévues de préférence au milieu du support (24, 25), et espacées latéralement l'une par rapport à l'autre.

9. Dispositif d'après la revendication 7,
caractérisé en ce que
les condensateurs (68) sont formés respectivement par deux ou par plusieurs plaques condensateurs annulaires disposés concentriquement l'un dans l'autre sur le support.

10. Dispositif d'après la revendication 9,
caractérisé en ce que
les condensateurs (68) sont munis de fentes de préférence radiales.

11. Dispositif d'après une des revendications 1 à 10,
caractérisé en ce que
les antennes (32, 33; 56; 65) sont formées respectivement par des conducteurs fermés en soi (boucles conductrices 36, 37; 76) ou des condensateurs (38, 39; 68) pour la transmission inductive et/ou capacitive de signaux alternatifs.

12. Dispositif d'après la revendication 11,
caractérisé en ce que
des condensateurs sous forme de peignes (38, 39) sont disposés à l'intérieur de boucles conductrices (36, 37) rectangulaires ou sous forme d'un anneau rectangulaire interrompu.

13. Dispositif d'après la revendication 11,
caractérisé en ce que
des condensateurs annulaires (68) munis de préférence de fentes radiales sont insérés au centre d'une boucle conductrice (67) conçue sous la forme d'un anneau circulaire interrompu.

14. Dispositif d'après une des revendications 1 à 13,
caractérisé en ce que
sur leur faces éloignées des antennes (32, 33), les supports (34, 35) comportent respectivement un blindage (40, 40') à surface plane.

15. Dispositif d'après la revendication 14,
caractérisé en ce que
pour la transmission des signaux alternatifs, les blindages (40, 40') des supports (34, 35) sont branchés respectivement à un système électronique d'émission et de réception (a", b").

16. Dispositif d'après une des revendications 1 à 15,
caractérisé en ce que
pour l'utilisation du noyau (4; 64) du transformateur (T) en tant que condensateur, ses moitiés (4", 4"') sont branchées respectivement à un système électronique d'émission et de réception (a", b").

17. Dispositif d'après la revendication 16,
caractérisé en ce que
les deux surfaces frontales extérieures du noyau (4) dirigées parallélement à l'interstice d'air (1) prévu entre les deux moitiés (4", 4‴) du noyau (4) sont munies d'un revêtement à conductance électrique (101, 102), p.ex. sous la forme d'un film de laque métallisée.

18. Dispositif d'après une des revendications 14 à 17,
caractérisé en ce que
les condensateurs formés par les blindages (40, 40') des supports (34, 35) et les moitiés (4", 4"') du noyau (4) sont branchés sur un système électronique commun d'émission et de réception (a", b") et qu'ils se prêtent à une commutation en cycles alternés.

19. Dispositif d'après une des revendications 1 à 18,
caractérisé en ce que
pour la transmission inductive des signaux alternatifs, les deux moitiés (4", 4"') du noyau (4) sont munies respectivement d'un enroulement (103 ou 104) disposé perpendiculairement à l'enroulement primaire (2) et à l'enroulement secondaire (3) et branché de préférence à un système électronique d'émission et de réception (a"' ou b"').

20. Dispositif d'après une des revendications 1 à 19,
caractérisé en ce que
l'enroulement primaire (52; 62; 92) et l'enroulement secondaire (53; 63; 93) du transformateur et/ou les antennes (85, 86; 95, 96) sont disposés de sorte qu'ils se laissent déplacer relativement l'un par rapport à l'autre, de préférence de façon linéaire ou rotative l'un contre l'autre.

21. Dispositif d'après la revendication 20,
caractérisé en ce que
dans le cas de deux enroulements (92, 93) réglables en direction linéaire l'un par rapport à l'autre et/ou d'antennes (95, 96), ceux-ci revêtent une forme de taille différente en direction du déplacement.

22. Dispositif d'après une des revendications 1 à 21,
caractérisé en ce que
à un ou à plusieurs des enroulements primaires (72) du transformateur, il est attribué un ou plusieurs enroulements secondaires (73, 73') et que, à une ou à plusieurs des antennes (75, 77) attribuées aux enroulements primaires (72), s'opposent une ou plusieurs antennes (76, 78) attribuées aux enroulements secondaires (73, 73').

23. Dispositif d'après une des revendications 1 à 22,
caractérisé en ce que
les antennes (31, 32; 55, 56) sont disposées par paires dans la fenêtre d'enroulement (F) du transformateur (T), de préférence sous la forme d'un rectangle interrompu ou d'un anneau circulaire simple ou multiple.

24. Dispositif d'après une des revendications 1 à 22,
caractérisé en ce que
les antennes (32', 33') entourent les bras du noyau (4) sous la forme d'un ou de plusieurs anneaux rectangulaires interrompus.

25. Dispositif d'après une des revendications 1 à 24,
caractérisé en ce que
les antennes sont logées individuellement ou ensemble dans un boîtier qui les entoure totalement ou partiellement, de préférence en matériau ferromagnétique.
